# FASCICULE DE BREVET EUROPEEN

(11) **EP 1 928 600 B1**
(45) Date de publication et mention de la délivrance du brevet: **24.11.2010**
(21) Numéro de dépôt: 06808189.2
(22) Date de dépôt: 22.09.2006
(51) Int. Cl.: B01L 3/00, A01N 1/02, A61D 19/02

(54) **ENSEMBLE DE CONDITIONNEMENT D'UN VOLUME PREDETERMINE DE SUBSTANCE A CONSERVER PAR VITRIFICATION CRYOGENIQUE**
ANORDNUNG ZUM VERPACKEN EINES VORBESTIMMTEN STOFFVOLUMENS ZUR AUFBEWAHRUNG DURCH KRYOGENE VERGLASUNG
ASSEMBLY FOR PACKAGING A PREDETERMINED VOLUME OF SUBSTANCE TO BE PRESERVED BY CRYOGENIC VITRIFICATION

(30) Priorité: 28.09.2005 FR 0509894
(43) Date de publication de la demande: 11.06.2008
(73) Titulaire: Cryo Bio System, 61300 L'Aigle (FR)
(72) Inventeur: CLAIRAZ, Philippe, F-92330 Sceaux (FR); VAN KAPPEL, Anne-Linda, F-69008 Lyon (FR); LESIEUR, Francis, F-61300 l'Aigle (FR)
(74) Mandataire: Lepelletier-Beaufond, François
(86) Numéro de dépôt international: PCT/FR2006/002171
(87) Numéro de publication internationale: WO 2007/036627

(56) Documents cités:
- EP-A- 0 480 109
- EP-A- 0 562 947
- EP-A- 0 635 305
- EP-A- 0 997 114
- DE-A1- 3 802 087
- US-A1- 2004 191 754
- US-B1- 6 303 285

## Description

La présente invention concerne un ensemble de conditionnement d'une substance à conserver par vitrification cryogénique.

Il existe plusieurs méthodes pour conserver une substance biologique (pouvant contenir des cellules embryonnaires par exemple) dans un agent cryogénique.

Une méthode de cryopréservation conventionnelle consiste à refroidir lentement et en plusieurs phases la substance à conserver. Une telle méthode présente le risque d'entraîner, lors de la congélation, la formation de cristaux de glace à l'intérieur des cellules à conserver pouvant porter atteinte à leur viabilité.

Une méthode alternative, dite par vitrification, consiste à refroidir quasiment instantanément la substance à conserver, celle-ci ayant été préparée avec une teneur en cryo-protecteurs plus élevée. Cette méthode empêche la formation de cristaux de glace tandis que la viscosité des cryo-protecteurs entraîne la formation d'une masse solide protectrice, assimilable à de la glace, augmentant significativement les chances de survie des cellules embryonnaires.

On connaît déjà des micro-paillettes (en anglais « open pulled straw ») ouvertes aux deux extrémités dans lesquelles la substance à vitrifier est aspirée par capillarité. Ces micro-paillettes sont ensuite directement plongées dans l'agent cryogénique (de l'azote liquide par exemple) pour vitrifier la substance à conserver.

Cette méthode de conditionnement donne d'excellents résultats. Cependant elle présente des risques de contamination croisée par l'intermédiaire de l'azote liquide (en contact par les extrémités ouvertes des micro-paillettes avec les différentes substances qu'elles contiennent), vecteur de contamination d'une substance par une autre, par des mycoplasmes, des virus ou d'autres micro-organismes capables de résister à l'azote liquide.

Pour éviter de tels risques de contamination, on a déjà proposé de placer la micro-paillette renfermant la substance à vitrifier dans un tube mince issu d'une paillette conventionnelle de conservation cryogénique d'une substance biologique, du genre classiquement utilisé pour conserver des échantillons sanguins ou des virus.

Une telle paillette est décrite dans la demande de brevet européen 0 480 109.

L'invention vise à fournir un niveau de sécurité comparable mais d'une façon plus commode pour l'opérateur.

Elle propose à cet effet un ensemble de conditionnement d'un volume prédéterminé de substance à conserver par vitrification cryogénique, **caractérisé en ce qu**'il comporte :
- une enveloppe comportant un tube mince ayant un diamètre interne prédéterminé et une longueur prédéterminée ;
- un support, comportant une zone de réception dudit volume prédéterminé, ledit support présentant une longueur prédéterminée inférieure à ladite longueur prédéterminée dudit tube mince et étant apte à être introduit à l'intérieur dudit tube mince ; et
- un poussoir comportant une première portion présentant une butée et une deuxième portion s'étendant sur une longueur prédéterminée à partir de ladite butée, la somme de ladite longueur prédéterminée de ladite deuxième portion et de ladite longueur prédéterminée dudit support étant inférieure à ladite longueur prédéterminée dudit tube mince, ladite deuxième portion étant apte à être introduite à l'intérieur dudit tube mince pour faire avancer ledit support jusqu'à ce que la butée de la première portion vienne contre le tube mince, ledit support prenant alors une position prédéterminée dans ledit tube mince avec un écart entre chaque extrémité dudit support et l'extrémité voisine dudit tube mince.

On voit que les trois éléments qui forment l'ensemble selon l'invention sont dimensionnés les uns par rapport aux autres de façon à coopérer dans les meilleures conditions de sorte qu'en particulier l'opération de mise en place du support dans l'enveloppe est mise en oeuvre sans difficulté de façon précise et efficace, notamment grâce à la présence du poussoir.

Au surplus, un très haut niveau de sécurité sanitaire est atteint si l'on prévoit que le poussoir de l'ensemble selon l'invention est à usage unique, par exemple en fournissant un emballage unitaire dans lequel est contenu une enveloppe, un support et un poussoir (un poussoir ne sert que pour un seul support et une seule enveloppe).

Selon des caractéristiques préférées, pour les mêmes raisons qu'exposées ci-dessus :
- chaque dit écart présente une valeur adaptée à permettre la réalisation d'une soudure dudit tube mince dans chaque portion d'extrémité dudit tube mince située entre une extrémité dudit support et l'extrémité voisine dudit tube mince ; et éventuellement
- au moins une desdites portions d'extrémité présente une valeur égale à ladite longueur prédéterminée de ladite deuxième portion dudit poussoir.

Selon d'autres caractéristiques préférées :
- le diamètre interne prédéterminé dudit tube mince est compris entre 0,95 et 2,55 mm et/ou
- l'épaisseur de paroi dudit tube mince est comprise entre 0,125 et 0,300 mm.

L'utilisation d'une enveloppe présentant de telles dimensions produit des résultats particulièrement optimum voire surprenant pour les performances en matière de rapidité de vitrification.

Selon encore d'autres caractéristiques préférées pour des raisons de simplicité et de commodité de mise en oeuvre :
- ledit tube mince est en résine ionomère Surlyn^{®} de type 8921 ; et/ou
- ledit tube mince présente à une extrémité un évasement ; et/ou
- ledit support comporte un embout tubulaire ayant un diamètre externe prédéterminé et une portion tubulaire allongée coaxialement emboîtée dans ledit embout ayant un diamètre externe prédéterminé inférieur audit diamètre externe prédéterminé dudit embout ; et éventuellement
- ladite portion tubulaire dudit support comporte une gouttière formant ladite zone de réception ; ou
- ladite portion tubulaire dudit support présente un méplat formant ladite zone de réception ; et/ou
- il existe entre ledit support et ledit tube mince des moyens de maintien pour maintenir ledit support dans ledit tube mince à ladite position prédéterminée ; et éventuellement
- les moyens de maintien comportent au moins un bossage saillant ; et éventuellement
- ledit bossage appartient audit support ; et éventuellement
- ledit bossage est un écrasement ; et/ou
- ladite première portion dudit poussoir est cylindrique et présente une dimension transversale supérieure audit diamètre interne prédéterminé dudit tube mince et ladite deuxième portion dudit poussoir est cylindrique, coaxiale à ladite première portion et présente une dimension transversale inférieure audit diamètre interne prédéterminé dudit tube mince ; et/ou
- ledit ensemble comporte en outre un lest prévu pour être associé soit audit support soit audit tube mince ; et éventuellement
- ledit lest est disposé à l'intérieur dudit tube mince et appartient à ladite enveloppe ; et éventuellement
- ledit lest est un jonc comportant un premier tronçon à section ronde et un deuxième tronçon à section ovale ; ou
- ledit lest est une bille ; et/ou
- ledit lest présente une longueur prédéterminée, et est placé dans ledit tube mince à une position prédéterminée, la somme de ladite longueur prédéterminée de ladite deuxième portion dudit poussoir, de ladite longueur prédéterminée dudit support et de ladite longueur prédéterminée dudit lest étant inférieure à ladite longueur prédéterminée dudit tube mince, ledit lest disposé à ladite position prédéterminée étant alors à l'écart de l'extrémité voisine dudit support et à l'écart de l'extrémité voisine dudit tube mince ; et éventuellement
- ledit écart entre ledit lest et ladite extrémité voisine dudit tube mince présente une valeur adaptée à permettre la réalisation d'une soudure dudit tube mince dans ladite portion d'extrémité dudit tube mince située entre ledit lest et l'extrémité voisine dudit tube mince ; et/ou
- il existe entre ledit lest et ledit tube mince des moyens de maintien pour maintenir ledit lest dans ledit tube mince à ladite position prédéterminée ; et éventuellement
- lesdits moyens de maintien comportent au moins une portion saillante dudit lest ; et/ou
- ledit lest est disposé autour dudit tube mince ; et éventuellement
- ledit lest est une bague ; et/ou
- ledit lest est disposé à une extrémité dudit tube mince ; et/ou
- ledit lest est en métal ; et/ou
- un moyen d'identification de ladite substance biologique est associé audit lest ; et éventuellement
- ledit moyen d'identification est visuel ; et/ou
- ledit moyen d'identification est électronique ; et/ou
- ledit ensemble comporte en outre un emballage unitaire dans lequel est contenu une seule dite enveloppe, un seul dit support et un seul dit poussoir ; et éventuellement
- ledit emballage est une barquette.

Les caractéristiques et avantages de l'invention ressortiront de la description d'un exemple préféré qui suit, donné à titre illustratif mais non limitatif, en référence aux dessins annexés, sur lesquels :
- la figure 1 est une vue en coupe longitudinale agrandie illustrant une enveloppe, un support et un poussoir d'un ensemble de conditionnement conforme à l'invention disposé dans un emballage unitaire ;
- la figure 2 est une vue similaire obtenue selon une coupe transversale ;
- la figure 3 est une vue en coupe illustrant le positionnement de l'enveloppe, du support et du poussoir de cet ensemble à la fin de l'opération d'introduction du support dans l'enveloppe ;
- la figure 4 est une vue similaire à la figure 3 mais dans laquelle le poussoir a été retiré ;
- la figure 5 est une vue similaire à la figure 4 mais dans laquelle l'enveloppe est soudée aux deux extrémités ;
- les figures 6 et 7 sont des vues en coupe illustrant respectivement un deuxième et un troisième mode de réalisation du support de l'ensemble de conditionnement ;
- les figures 8 et 9 sont respectivement une vue en coupe et une vue en élévation prise du coté que l'on voit à gauche sur la figure 8 d'un quatrième mode de réalisation du support de l'ensemble de conditionnement ;
- la figure 10 est une vue en coupe d'une enveloppe, comportant le tube mince illustré sur les figures 1 à 5 et un lest disposé dans le tube mince ;
- la figure 11 est une vue en coupe similaire à la figure 10 mais illustrant le positionnement du support dans cette enveloppe à la fin de l'opération d'introduction du support dans l'enveloppe ;
- les figures 12 et 13 sont respectivement une vue en coupe et une vue en élévation prise du coté que l'on voit à gauche sur la figure 12 du lest que comporte cette enveloppe ;
- les figures 14 et 15 sont deux vues en coupe illustrant deux modes de réalisation de l'enveloppe pour lesquels le lest est conformé différemment ; et
- les figures 16 et 17 sont deux vues schématiques de lests auxquels ont été associés des moyens d'identification de la substance biologique, visuel pour l'un et électronique pour l'autre.

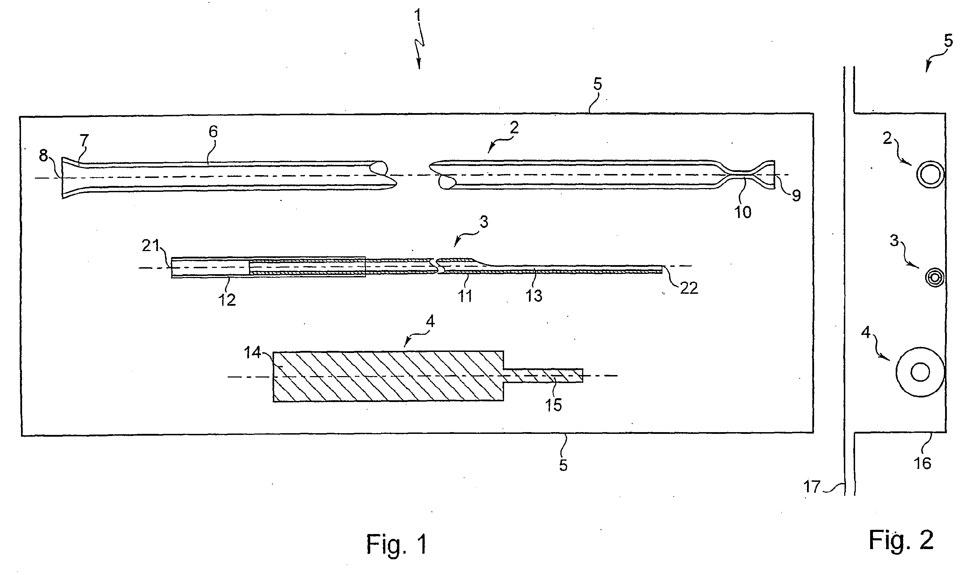

L'ensemble de conditionnement 1 représenté en figure 1 est destiné à conditionner un volume prédéterminé de substance à vitrifier, pour cela il comporte une enveloppe 2, un support 3 et un poussoir 4.

L'ensemble 1 est contenu dans un emballage unitaire 5.

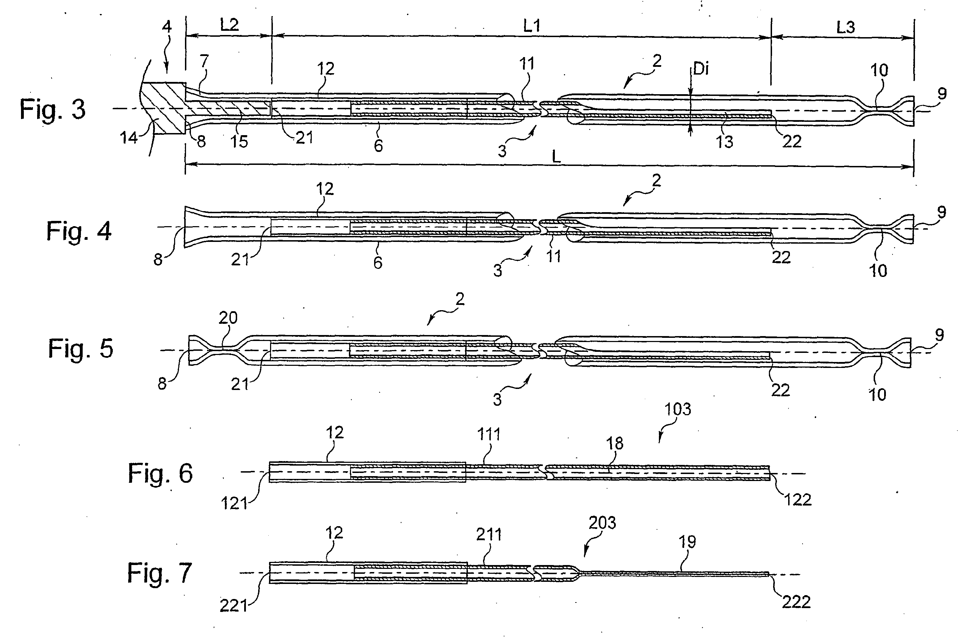

L'enveloppe 2 illustrée en figures 1 à 5 comporte un tube mince 6 de longueur L et de diamètre interne Dᵢ (figure 3). Le tube mince 6 présente une portion évasée 7 à une première extrémité 8 tandis qu'il présente une soudure 10 au voisinage de l'extrémité opposée 9.

On notera que l'on emploie ici le terme « soudure » pour désigner indifféremment la zone soudée à proprement parler ou celle-ci et la portion déformée qui l'environne.

L'enveloppe 2 est en matériau polymère choisi par exemple parmi les résines ionomères pour leur bonne tenue mécanique, leur comportement au froid et leur capacité à être soudées facilement tout en assurant une bonne étanchéité.

Les résines ionomères, formées par association d'un copolymère d'éthylène et d'un acide carboxylique avec un cation métallique possèdent la propriété de se comporter, au dessus d'une zone de température de transition, située dans la gamme 40°C-90°C, comme un matériau thermoplastique, tandis qu'en dessous de cette zone de transition elles se comportent comme un matériau réticulé, les cations métalliques formant des liaisons transversales entre des chaînes linéaires de copolymère. La transformation est réversible. La soudure du tube est simple et efficace, au-dessus des températures de transition ; le refroidissement après soudure n'induit que peu de tensions internes, le figeage de la résine par réticulation ionique ne s'accompagnant pas de variations importantes de volume.

Ces résines sont commercialisées sous le nom de marque Surlyn^{®}.

La structure réticulée des résines Surlyn^{®} à la température ambiante confère à l'enveloppe une bonne tenue mécanique ; l'enveloppe n'a pas tendance à fluer sous son propre poids et reste rectiligne.

Bien entendu les résines Surlyn^{®} possèdent des qualités de transparence et de neutralité biologique convenables.

Ici, la résine employée est du type commercialisé sous la dénomination Surlyn^{®} 8921 (également connu sous la référence commerciale Surlyn^{®} « PC100 »). Cette résine comporte un cation métallique sodium, et l'on n'a pu en déterminer une température de fragilisation. En relation avec la zone de transition, la température de fusion est de 84°C, et la température de solidification de 52°C.

La soudure est obtenue dans la gamme 90°C-110°C

Dans l'exemple illustré, la paroi du tube mince 6 présente une épaisseur comprise entre 0,125 et 0,300 mm et un diamètre intérieur compris entre 0,95 et 2,55 mm (1,60 mm dans l'exemple illustré) pour une longueur de 133 mm. L'évasement 7 s'étend sur 1,5 mm de longueur.

Le support 3 est constitué d'une portion tubulaire allongée 11 emboîtée coaxialement dans un embout tubulaire 12 de diamètre externe supérieur à celui de la portion tubulaire 11 de façon à obtenir un support étagé de longueur L1 (figure 3).

La portion tubulaire 11 est ici tronquée sur une étendue angulaire d'environ 180 degrés et sur environ 15 mm à partir de l'extrémité opposée à celle emboîtée dans l'embout 12 de façon à former une gouttière 13 qui comme exposé ci-après constitue la zone de réception du volume prédéterminé de substance.

L'embout tubulaire 12 est un tube de diamètre externe inférieur au diamètre interne Dᵢ de l'enveloppe.

L'embout 12 est coloré, une couleur pouvant correspondre par exemple à un type de substance biologique.

L'emballage unitaire 5 et l'embout tubulaire 12 portent accessoirement des inscriptions alphanumériques et/ou de type code à barres (non représentées sur les figures) permettant d'identifier l'ensemble de conditionnement 1.

Comme on le verra ci-après à l'aide de la figure 3, le support 3 présente une dimension transversale maximale inférieure au diamètre interne Dᵢ du tube mince et une longueur L1 inférieure à la longueur L de ce tube de façon à pouvoir être introduit à l'intérieur de l'enveloppe 2 tout en conservant un écart entre chaque extrémité 21 et 22 du support 3 et l'extrémité voisine correspondante 8, 9 du tube mince 6 pour souder le tube mince au voisinage des deux extrémités lorsque le support 3 est dans une position globalement centrée à l'intérieur du tube 6.

L'embout 12 et la portion tubulaire 11 sont réalisés ici en PETG.

On va maintenant décrire le poussoir 4 et l'emballage 5 à l'aide des figures 1 à 3.

Le poussoir 4 présente une première portion cylindrique 14 de diamètre externe supérieur au diamètre interne Dᵢ du tube 6 et une seconde portion cylindrique 15 de diamètre externe inférieur au diamètre interne Dᵢ de ce tube. La seconde portion cylindrique présente une longueur L2 (figure 3).

L'emballage 5 est une barquette pelable, ici en Tyvek^{®}, présentant une zone de réception 16 de chacun des éléments de l'ensemble de conditionnement disposés côte à côte (à savoir une enveloppe 2, un support 3 et un poussoir 4) fermée de façon étanche par un film pelable 17.

On va maintenant décrire l'opération de conditionnement du volume à conserver à l'aide des figures 1 à 5.

L'opérateur ouvre l'emballage 5 en pelant le film 17 pour accéder au support 3 en le saisissant par l'embout de manipulation 12. Un volume de substance liquide (non représenté sur les figures) est alors déposé par l'opérateur dans la gouttière 13 du support 3.

Le support 3 est ensuite introduit dans le tube mince 6 de l'enveloppe 2, la gouttière 13 en premier, par l'extrémité 8. La portion évasée 7 facilite le guidage du support 3 vers l'intérieur du tube.

Le poussoir est ensuite disposé devant l'extrémité 8 du tube 6 pour y introduire la portion 15. La forme étagée du poussoir 4 et ses dimensions permettent d'introduire la portion 15 sans que ne pénètre la portion 14, l'épaulement que comporte la portion 14 à sa jonction avec la portion 15 formant une butée qui vient contre le bord de l'évasement 7.

Dans cette position de butée illustrée en figure 3, le support 3 est poussé dans le tube mince 6 d'une longueur égale à la longueur L2 de la portion 15.

Dans cette position, le support 3 est globalement centré à l'intérieur du tube 6 avec un écart entre chacune de ses extrémités 21, 22 et l'extrémité voisine respective 8, 9 de ce tube.

Une fois le poussoir retiré, l'écart entre l'extrémité 21 du support 3 et l'extrémité voisine 8 du tube mince 6 est suffisant pour qu'une soudure 20 puisse être réalisée facilement dans la portion d'extrémité du tube de longueur égale à L2 (figure 5).

De même une soudure 10 a été déjà réalisée dans la portion d'extrémité opposée du tube mince 6 de longueur L3 égale à la différence de longueur entre la longueur L du tube 6 et la somme (L1+L2) de la longueur L2 de la portion 15 et de la longueur L1 du support 3.

L'écart entre l'extrémité 22 du support 3 et l'extrémité 9 du tube 6 est suffisant pour que le support 3, avec la soudure 10 déjà réalisée, puisse être introduit à l'intérieur du tube d'une longueur au moins égale à la somme (L1+L2) de la longueur L2 de la portion 15 et de la longueur L1 du support 3 sans que le support ne soit gêné par la soudure 10.

Dans cet exemple la longueur L2 est de 8 mm.

L'embout tubulaire 12 permet de disposer la gouttière 13 au centre coaxialement du tube 6 en vue d'éviter tout contact de la substance à vitrifier avec la surface interne de ce tube.

Le poussoir 4 est individuel à chaque ensemble de conditionnement et est à usage unique afin de minimiser les risques de contamination lors du conditionnement.

L'enveloppe 2 contenant le support 3 et soudée aux deux extrémités est ensuite plongée à la verticale pour faciliter le stockage, dans un liquide cryogénique (de l'azote liquide par exemple) pour vitrifier la substance en vue de sa cryopreservation.

Lorsque l'enveloppe 2 est plongée verticalement, la substance (liquide avant congélation) ne s'écoule pas en raison de la viscosité des cryo-protecteurs qui la composent et qui sont à l'origine de tensions de surfaces avec le support 3 suffisamment importantes pour empêcher la goutte de s'écouler.

Le support 3 peut être remplacé par les supports 103, 203 et 303 respectivement illustrés en figures 6, 7 et 8. D'une manière générale, on a conservé pour les éléments exactement identiques les mêmes références numériques que pour le support 3 tandis que l'on a employé pour les éléments similaires les mêmes références, mais additionnées pour chaque mode de réalisation d'un chiffre 100.

Le support 103 illustré en figure 6 présente une portion tubulaire 111 qui n'est pas ouverte en gouttière à son extrémité, la substance liquide est alors aspirée par capillarité ou en générant une dépression (par une source de vide par exemple) appliquée à l'extrémité 121 du support 103. La substance liquide pénètre alors par l'extrémité 122 pour occuper une partie du volume interne 18 de la portion tubulaire 111.

Le support 203 illustré en figure 7 présente une portion tubulaire 211 écrasée sur 15 mm pour former un méplat 19 qui constitue la zone de réception sur laquelle est déposé le volume de substance liquide.

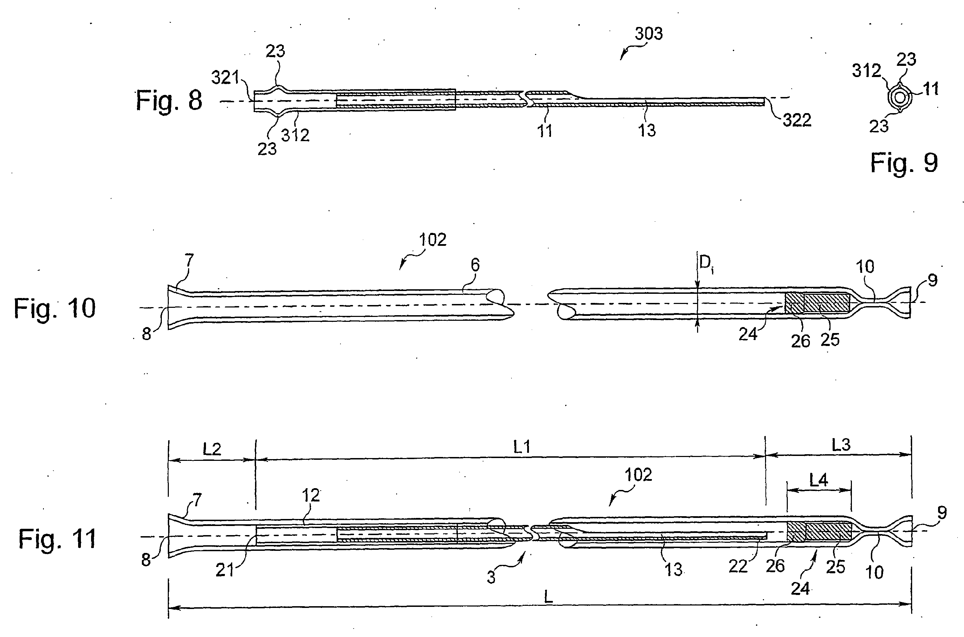

Dans le support 303 représenté en figures 8 et 9, l'embout tubulaire 312 présente deux bossages 23 diamétralement opposés. Les bossages sont obtenus en écrasant localement la matière pour permettre ainsi d'augmenter la dimension transversale maximale du support 303 afin qu'elle soit légèrement supérieure au diamètre interne Dᵢ du tube mince 6. De cette façon, lors de l'introduction du support 303 dans le tube mince 6, les portions écrasées 23 viennent en appui contre la surface interne du tube mince 6 de l'enveloppe 2 en déformant localement le tube mince 6 pour agir comme un frein de positionnement et maintenir le support 303 en position en empêchant tout mouvement de glissement involontaire du support 303 sous son propre poids à l'intérieur de l'enveloppe 2.

Dans l'exemple illustré la formation des bossages par écrasement permet de faire passer la dimension transversale maximale du support de 1,4 à 1,7 mm.

Dans des variantes non illustrées, les bossages 23 sont remplacés par des bossages formés sur le tube mince 6 de l'enveloppe en faisant saillie vers l'intérieur afin de réduire localement le diamètre interne du tube 6 ou sont remplacés par une ou plusieurs saillies différentes d'un simple bossage.

Le support peut également être dimensionné afin qu'il s'ajuste glissant serré dans l'enveloppe.

L'enveloppe 2 peut être remplacée par les enveloppes 102, 202 et 302 respectivement illustrées en figures 10, 14 et 15. Ces enveloppes comprennent chacune un lest coopérant avec le tube mince.

L'enveloppe 102 illustrée en figure 10 comporte ainsi en plus du tube mince 6 un lest disposé à l'intérieur du tube mince 6.

Le lest est un jonc 24 présentant un premier tronçon 25 à section ronde et un second tronçon 26 écrasé de façon à former une section ovale. Une portion du tronçon 26 délimitée par la surface 27 fait saillie par rapport au tronçon 25. Ce jonc est réalisé dans un matériau de densité supérieure à celle de l'agent cryogénique liquide, du métal dans l'exemple illustré.

Le tronçon à section ovale 26 présente une dimension transversale maximale légèrement supérieure au diamètre interne Dᵢ du tube mince 6 afin que la portion saillante, lors de l'opération d'introduction du jonc 24 dans l'enveloppe 2, vienne en appui contre la surface interne du tube mince 6 en déformant localement le tube mince 6 pour agir comme un frein de positionnement et maintenir le jonc 24 en empêchant tout mouvement de glissement involontaire de ce jonc sous son propre poids à l'intérieur du tube mince 6.

On va maintenant décrire l'opération d'introduction du jonc 24 dans le tube mince 6 à l'aide des figures 10 et 11.

Le jonc 24 est introduit dans le tube mince 6 avant que la soudure 10 ne soit réalisée, en conservant un écart entre le lest 24 et l'extrémité 9 du tube 6.

Une fois le jonc introduit, la soudure 10 est réalisée dans la portion d'extrémité du tube mince 6 située entre l'extrémité 9 et le jonc 24.

Le jonc est ensuite poussé à l'aide d'une tige (non représentée sur les figures) introduite par l'extrémité 8 pour le faire venir en butée contre la soudure 10 du tube mince 6 comme illustré en figure 10.

Le jonc 24 est dimensionné de façon à pouvoir venir se loger en butée contre la soudure 10 dans l'espace situé entre l'extrémité 22 du support 3 (une fois celui-ci introduit dans l'enveloppe et placé en position à l'aide du poussoir 4) et la soudure 10 tout en conservant un écart avec l'extrémité 22.

Dans cet exemple, le lest présente une longueur L4 de 10 mm, l'écart entre l'extrémité 21 du support 3 et l'extrémité voisine 8 du tube 6 est de 8 mm tandis que l'écart entre l'extrémité opposée 22 du support 3 et le lest 24 est de 5 mm.

Ce lest tend à faire plonger verticalement dans l'azote liquide l'enveloppe scellée empêchant ainsi l'air piégé dans cette enveloppe de la faire flotter en surface de l'azote liquide.

L'enveloppe est ainsi entourée très rapidement et sur toute sa surface d'azote liquide, la substance biologique est alors vitrifiée de façon homogène et quasiment instantanément.

Le lest situé à l'extrémité du tube mince 6 ne perturbe pas le refroidissement de la substance à vitrifier.

Ce refroidissement quasi instantané et homogène de la substance biologique assure une vitrification de qualité qui minimise les risques de destruction des micro-organismes ou des cellules présents dans la substance biologique.

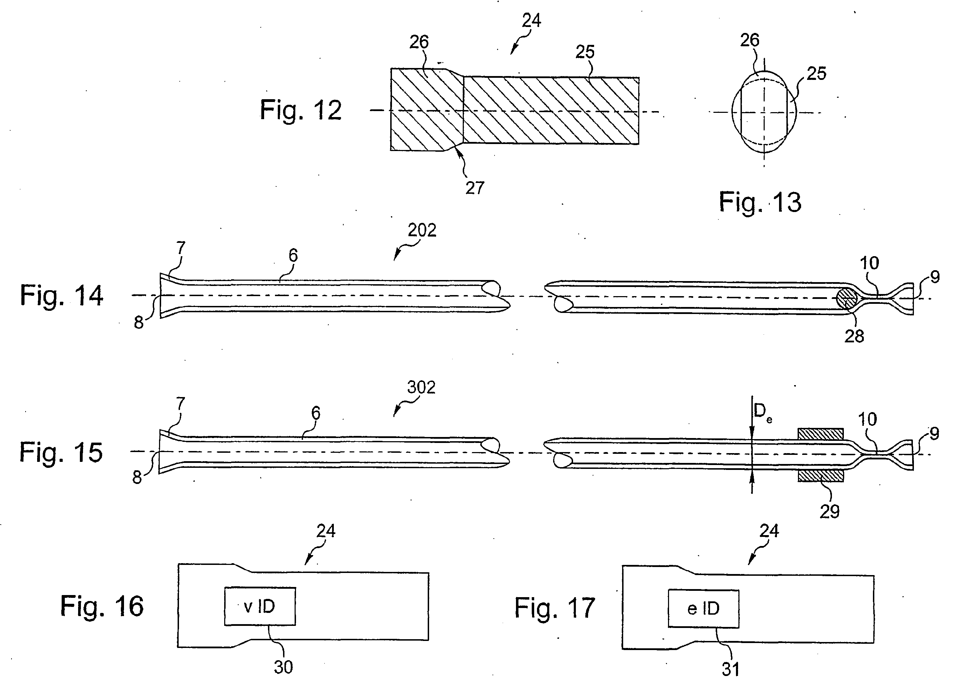

Dans l'enveloppe 202 illustrée en figure 14 le lest est une bille métallique 28 de diamètre légèrement supérieur au diamètre interne Dᵢ du tube mince 6. La bille 28 est disposée à l'intérieur du tube mince 6 contre la soudure 10 selon la même méthode que celle décrite pour l'introduction du jonc 24 dans le tube mince 6.

Dans le cas d'un lest disposé à l'intérieur du tube mince, deux soudures telles que 10 peuvent être réalisées de part et d'autre du lest pour empêcher tout contact avec la substance biologique.

Une alternative consiste à utiliser un lest annulaire tel que celui représenté en figure 15. Le lest de l'enveloppe 302 est une bague métallique 29 enfilée autour du tube mince 6. La bague 29 présente un diamètre interne légèrement inférieur au diamètre externe De du tube mince 6 afin que la bague 29 vienne en appui contre la surface externe du tube mince 6 en déformant localement le tube.

Dans les modes de réalisation représentés en figures 16 et 17, un moyen d'identification de la substance biologique que contient le tube mince est associé au lest 24. Le moyen d'identification 30 représenté en figure 16 est visuel et est constitué d'un code couleur, d'un code barre ou encore d'une suite de caractères.

Le moyen d'identification 31 représenté en figure 17 est électronique, par exemple une puce RFID ou une pastille électromagnétique collée contre le lest ou intégrée à celui-ci.

Dans des modes de réalisation non représentés, ce sont les lests 28 et 29 qui comportent un moyen d'identification tel que 30 ou 31; et/ou l'enveloppe comporte un manchon d'identification entourant le tube mince 6.

Il est possible de remplacer le lest 29 par un lest également disposé à l'extérieur du tube mince 6 mais entourant par exemple la soudure 10 une fois celle-ci réalisée.

Il est également possible de combiner n'importe laquelle des enveloppes avec n'importe lequel des supports décrits ci-dessus.

Dans encore un autre mode de réalisation, dans le cas où l'enveloppe utilisée est dépourvue de lest, il est possible de placer un lest à l'intérieur de l'embout tubulaire du support. Par exemple un lest semblable au jonc 24 mais présentant des dimensions adaptées pour être introduit et maintenu à l'intérieur de cet embout. La forme ovale d'un des deux tronçons de jonc permet (dans le cas par exemple où l'embout est utilisé dans le support 103 et où il est nécessaire d'engendrer une dépression à l'extrémité 121) de ne pas obstruer complètement le volume interne de l'embout et de permettre ainsi d'aspirer le liquide en engendrant une dépression à l'extrémité de l'embout.

Quelque soit le mode de réalisation choisi, la soudure 10 peut n'être réalisée qu'une fois le support introduit dans l'enveloppe et placé en position à l'aide du poussoir 4.

L'invention concerne également tous types d'enveloppes de conditionnement lestées destinées à être plongées dans un agent de conservation liquide.

La présente invention n'est pas limitée aux modes de réalisation décrits et représentés mais englobe toute variante d'exécution.

## Revendications

1. Ensemble de conditionnement d'un volume prédéterminé de substance à conserver par vitrification cryogénique ; **caractérisé en ce qu'**il comporte:
- une enveloppe (2 ; 102 ; 202 ; 302) comportant un tube mince (6) ayant un diamètre interne prédéterminé (Dᵢ) et une longueur prédéterminée (L);
- un support (3; 103; 203; 303), comportant une zone de réception (13 ; 18 ; 19) dudit volume prédéterminé, ledit support (3 ; 103 ; 203 ; 303) présentant une longueur prédéterminée (L1) inférieure à ladite longueur prédéterminée (L) dudit tube mince (6) et étant apte à être introduit à l'intérieur dudit tube mince (6) ; et
- un poussoir (4) comportant une première portion (14) présentant une butée et une deuxième portion (15) s'étendant sur une longueur prédéterminée (L2) à partir de ladite butée, la somme de ladite longueur prédéterminée (L2) de ladite deuxième portion (15) et de ladite longueur prédéterminée (L1) dudit support (3 ; 103 ; 203 ; 303) étant inférieure à ladite longueur prédéterminée (L) dudit tube mince (6), ladite deuxième portion (15) étant apte à être introduite à l'intérieur dudit tube mince (6) pour faire avancer ledit support (3 ; 103 ; 203 ; 303) jusqu'à ce que la butée de la première portion (14) vienne contre ledit tube mince (6), ledit support (3 ; 103 ; 203 ; 303) prenant alors une position prédéterminée dans ledit tube mince (6) avec un écart entre chaque extrémité (21 ; 121 ; 221 ; 321, 22 ; 122 ; 222 ; 322) dudit support (2 ; 102 ; 202 ; 302) et l'extrémité voisine (8, 9) dudit tube mince (6).

2. Ensemble selon la revendication 1, **caractérisé en ce que** chaque dit écart présente une valeur adaptée à permettre la réalisation d'une soudure (10, 20) dudit tube mince (6) dans chaque portion d'extrémité dudit tube mince (6) située entre une extrémité (21 ; 121 ; 221 ; 321, 22 ; 122 ; 222 ; 322) dudit support (3 ; 103 ; 203 ; 303) et l'extrémité voisine (8,9) dudit tube mince (6).

3. Ensemble selon la revendication 2, **caractérisé en ce qu'**au moins une desdites portions d'extrémité présente une valeur égale à ladite longueur prédéterminée (L2) de ladite deuxième portion (15) dudit poussoir (4).

4. Ensemble selon l'une quelconque des revendications 1 à 3, **caractérisé en ce que** le diamètre interne prédéterminé (Dᵢ) dudit tube mince (6) est compris entre 0,95 et 2,55 mm.

5. Ensemble selon l'une quelconque des revendications 1 à 4, **caractérisé en ce que** l'épaisseur de paroi dudit tube mince (6) est comprise entre 0,125 et 0,300 mm.

6. Ensemble selon l'une quelconque des revendications 1 à 5, **caractérisé en ce que** ledit tube mince (6) est en résine ionomère Surlyn^{®} de type 8921.

7. Ensemble selon l'une quelconque des revendications 1 à 6, **caractérisé en ce que** ledit tube mince (6) présente à une extrémité (8) un évasement (7).

8. Ensemble selon l'une quelconque des revendications 1 à 7, **caractérisé en ce que** ledit support (3 ; 103 ; 203) comporte un embout tubulaire (12) ayant un diamètre externe prédéterminé et une portion tubulaire allongée (11 ; 111 ; 211) coaxialement emboîtée dans ledit embout (12) ayant un diamètre externe prédéterminé inférieur audit diamètre externe prédéterminé dudit embout (12).

9. Ensemble selon la revendication 8, **caractérisé en ce que** ladite portion tubulaire (11 ; 311) dudit support (3 ; 303) comporte une gouttière (13) formant ladite zone de réception.

10. Ensemble selon la revendication 8, **caractérisé en ce que** ladite portion tubulaire (211) dudit support (203) présente un méplat (19) formant ladite zone de réception.

11. Ensemble selon l'une quelconque des revendications 1 à 10, **caractérisé en ce qu'**il existe entre ledit support (303) et ledit tube mince (6) des moyens de maintien pour maintenir ledit support (303) dans ledit tube mince (6) à ladite position prédéterminée.

12. Ensemble selon la revendication 11, **caractérisé en ce que** les moyens de maintien comportent au moins un bossage saillant (23).

13. Ensemble selon la revendication 12, **caractérisé en ce que** ledit bossage (23) appartient audit support (303).

14. Ensemble selon l'une quelconque des revendications 11 et 12, **caractérisé en ce que** ledit bossage (23) est un écrasement.

15. Ensemble selon l'une quelconque des revendications 1 à 14, **caractérisé en ce que** ladite première portion (14) dudit poussoir (4) est cylindrique et présente une dimension transversale supérieure audit diamètre interne prédéterminé (Dᵢ) dudit tube mince (6) et ladite deuxième portion (15) dudit poussoir (4) est cylindrique, coaxiale à ladite première portion (14) et présente une dimension transversale inférieure audit diamètre interne prédéterminé (Dᵢ) dudit tube mince (6).

16. Ensemble selon l'une quelconque des revendications 1 à 15, **caractérisé en ce que** ledit ensemble comporte en outre un lest (24 ; 28 ; 29) prévu pour être associé soit audit support (3 ; 103 ; 203 ; 303) soit audit tube mince (6).

17. Ensemble selon la revendication 16, **caractérisé en ce que** ledit lest (24 ; 28) est disposé à l'intérieur dudit tube mince (6) et appartient à ladite enveloppe (102 ; 202).

18. Ensemble selon la revendication 17, **caractérisé en ce que** ledit lest est un jonc (24) comportant un premier tronçon à section ronde (25) et un deuxième tronçon à section ovale (26).

19. Ensemble selon la revendication 17, **caractérisé en ce que** ledit lest est une bille (28).

20. Ensemble selon l'une quelconque des revendications 17 à 19, **caractérisé en ce que** ledit lest présente une longueur prédéterminée (L4), et est placé dans ledit tube mince (6) à une position prédéterminée, la somme de ladite longueur prédéterminée (L2) de ladite deuxième portion (15) dudit poussoir (4), de ladite longueur prédéterminée (L1) dudit support (3 ; 103 ; 203 ; 303) et de ladite longueur prédéterminée (L4) dudit lest (24) étant inférieure à ladite longueur prédéterminée (L) dudit tube mince (6), ledit lest (24) placé à ladite position prédéterminée étant alors à l'écart de l'extrémité voisine (22 ; 122 ; 222 ; 322) dudit support (3 ; 103 ; 203 ; 303) et à l'écart de l'extrémité voisine (9) dudit tube mince (6).

21. Ensemble selon la revendication 20, **caractérisé en ce que** ledit écart entre ledit lest (24) et ladite extrémité voisine (9) dudit tube mince (6) présente une valeur adaptée à permettre la réalisation d'une soudure (10) dudit tube mince (6) dans ladite portion d'extrémité dudit tube mince (6) située entre ledit lest (24) et l'extrémité voisine (9) dudit tube mince (6).

22. Ensemble selon l'une quelconque des revendications 17 à 21, **caractérisé en ce qu'**il existe entre ledit lest (24 ; 28) et ledit tube mince (6) des moyens de maintien pour maintenir ledit lest (24 ; 28) dans ledit tube mince (6) à ladite position prédéterminée.

23. Ensemble selon la revendication 22, **caractérisé en ce que** lesdits moyens de maintien comportent au moins une portion saillante (27) dudit lest (24).

24. Ensemble selon la revendication 16, **caractérisé en ce que** ledit lest est disposé autour dudit tube mince (6).

25. Ensemble selon la revendication 24, **caractérisé en ce que** ledit lest est une bague (29).

26. Ensemble selon l'une quelconque des revendications 16 à 25, **caractérisé en ce que** ledit lest (24 ; 28 ; 29) est disposé à une extrémité dudit tube mince (6).

27. Ensemble selon l'une quelconque des revendications 16 à 26, **caractérisé en ce que** ledit lest (24 ; 28 ; 29) est en métal.

28. Ensemble selon l'une quelconque des revendications 16 à 27, **caractérisé en ce qu'**un moyen d'identification (30 ; 31) de ladite substance biologique est associé audit lest (24 ; 28 ; 29).

29. Ensemble selon la revendication 28, **caractérisé en ce que** ledit moyen d'identification (30) est visuel.

30. Ensemble selon la revendication 28, **caractérisé en ce que** ledit moyen d'identification (31) est électronique.

31. Ensemble selon l'une quelconque des revendications 1 à 30, **caractérisé en ce que** ledit ensemble comporte en outre un emballage unitaire (5) dans lequel est contenu une seule dite enveloppe (2 ; 102 ; 202 ; 302), un seul dit support (3 ; 103 ; 203 ; 303) et un seul dit poussoir (4).

32. Ensemble selon la revendication 31, **caractérisé en ce que** ledit emballage (5) est une barquette.

## Claims

1. Kit for packaging a predetermined volume of substance to be preserved by cryogenic vitrification, **characterized in that** it includes:
- a sheathing (2; 102; 202; 302) including a thin tube (6) having a predetermined inside diameter (Dᵢ) and a predetermined length (L);
- a support (3; 103; 203; 303) including an area (13; 18; 19) for receiving said predetermined volume, said support (3; 103; 203; 303) having a predetermined length (L1) less than said predetermined length (L) of said thin tube (6) and being adapted to be introduced into said thin tube (6); and
- a pusher member (4) having a first portion (14) including an abutment and a second portion (15) extending a predetermined length (L2) from said abutment, the sum of said predetermined length (L2) of said second portion (15) and said predetermined length (L1) of said support (3; 103; 203; 303) being less than said predetermined length (L) of said thin tube (6), said second portion (15) being adapted to be introduced into said thin tube (6) to move said support (3; 103; 203; 303) forward until the abutment of the first portion (14) comes up against said thin tube (6), said support (3; 103; 203; 303) then assuming a predetermined position in said thin tube (6) with a gap between each end (21; 121; 221; 321, 22; 122; 222; 322) of said support (2; 102; 202; 302) and the adjacent end (8, 9) of said thin tube (6).

2. Kit according to claim 1, **characterized in that** each of said gaps has a length adapted to enable production of a weld (10, 20) in said thin tube (6) in each end portion of said thin tube (6) situated between one end (21; 121; 221; 321, 22; 122; 222; 322) of said support (3; 103; 203; 303) and the adjacent end (8, 9) of said thin tube (6).

3. Kit according to claim 2, **characterized in that** at least one of said end portions has a length equal to said predetermined length (L2) of said second portion (15) of said pusher member (4).

4. Kit according to any one of claims 1 to 3, **characterized in that** the predetermined inside diameter (Dᵢ) of said thin tube (6) is between 0.95 and 2.55 mm.

5. Kit according to any one of claims 1 to 4, **characterized in that** the wall thickness of said thin tube (6) is between 0.125 and 0.300 mm.

6. Kit according to any one of claims 1 to 5, **characterized in that** said thin tube (6) is in Surlyn^{®} type 8921 ionomer resin.

7. Kit according to any one of claims 1 to 6, **characterized in that** said thin tube (6) has a flare (7) at one end (8).

8. Kit according to any one of claims 1 to 7, **characterized in that** said support (3; 103; 203) includes a tubular end-piece (12) having a predetermined outside diameter and an elongate tubular portion (11; 111; 211) coaxially nested in said end-piece (12) having a predetermined outside diameter less than said predetermined outside diameter of said end-piece (12).

9. Kit according to claim 8, **characterized in that** said tubular portion (11; 311) of said support (3; 303) includes a gutter (13) forming said reception area.

10. Kit according to claim 8, **characterized in that** said tubular portion (211) of said support (203) has a flat (19) forming said reception area.

11. Kit according to any one of claims 1 to 10, **characterized in that** there exist between said support (303) and said thin tube (6) retaining means for retaining said support (303) in said thin tube (6) at said predetermined position.

12. Kit according to claim 11, **characterized in that** the retaining means include at least one projecting boss (23).

13. Kit according to claim 12, **characterized in that** said boss (23) is part of said support (303).

14. Kit according to either of claims 11 and 12, **characterized in that** said boss (23) is produced by a crushing operation.

15. Kit according to any one of claims 1 to 14, **characterized in that** said first portion (14) of said pusher member (4) is cylindrical and has a transverse dimension greater than said predetermined inside diameter (Dᵢ) of said thin tube (6) and said second portion (15) of said pusher member (4) is cylindrical and coaxial with said first portion (14) and has a transverse dimension less than said predetermined inside diameter (Dᵢ) of said thin tube (6).

16. Kit according to any one of claims 1 to 15, **characterized in that** said kit further includes a ballast weight (24; 28; 29) adapted to be associated either with said support (3; 103; 203; 303) or with said thin tube (6).

17. Kit according to claim 16, **characterized in that** said ballast weight (24; 28) is disposed inside said thin tube (6) and is part of said sheathing (102; 202).

18. Kit according to claim 17, **characterized in that** said ballast weight is a slug (24) having a round section first portion (25) and an oval section second portion (26).

19. Kit according to claim 17, **characterized in that** said ballast weight is a ball (28).

20. Kit according to any one of claims 17 to 19, **characterized in that** said ballast weight has a predetermined length (L4) and is placed in said thin tube (6) at a predetermined position, the sum of said predetermined length (L2) of said second portion (15) of said pusher member (4), said predetermined length (L1) of said support (3; 103; 203; 303) and said predetermined length (L4) of said ballast weight (24) being less than said predetermined length (L) of said thin tube (6), said ballast weight (24) placed at said predetermined position then being spaced from the adjacent end (22; 122; 222; 322) of said support (3; 103; 203; 303) and spaced from the adjacent end (9) of said thin tube (6).

21. Kit according to claim 20, **characterized in that** said spacing between said ballast weight (24) and said adjacent end (9) of said thin tube (6) is adapted to allow the production of a weld (10) in said thin tube (6) in said end portion of said thin tube (6) situated between said ballast weight (24) and the adjacent end (9) of said thin tube (6).

22. Kit according to any one of claims 17 to 21, **characterized in that** there exist between said ballast weight (24; 28) and said thin tube (6) retaining means for retaining said ballast weight (24; 28) in said thin tube (6) at said predetermined position.

23. Kit according to claim 22, **characterized in that** said retaining means include at least one projecting portion (27) of said ballast weight (24).

24. Kit according to claim 16, **characterized in that** said ballast weight is disposed around said thin tube (6).

25. Kit according to claim 24, **characterized in that** said ballast weight is a ring (29).

26. Kit according to any one of claims 16 to 25, **characterized in that** said ballast weight (24; 28; 29) is disposed at one end of said thin tube (6).

27. Kit according to any one of claims 16 to 26, **characterized in that** said ballast weight (24; 28; 29) is of metal.

28. Kit according to any one of claims 16 to 27, **characterized in that** means (30; 31) for identifying said biological substance are associated with said ballast weight (24; 28; 29).

29. Kit according to claim 28, **characterized in that** said identification means (30) are visual.

30. Kit according to claim 28, **characterized in that** said identification means (31) are electronic.

31. Kit according to any one of claims 1 to 30, **characterized in that** said kit further includes a unitary packaging (5) which contains a single sheathing (2; 102; 202; 302), a single support (3; 103; 203; 303) and a single pusher member (4).

32. Kit according to claim 31, **characterized in that** said packaging (5) is a tray.

## Patentansprüche

1. Anordnung zum Verpacken eines vorbestimmten Stoffvolumens zur Aufbewahrung durch kryogene Verglasung (Versiegelung); **dadurch gekennzeichnet, dass** sie umfasst:
- eine Hülle (2; 102, 202; 302), umfassend ein dünnes Rohr (6) mit einem vorbestimmten Innendurchmesser (Dᵢ) und einer vorbestimmten Länge (L);
- eine Stütze (3; 103; 203; 303), umfassend eine Aufnahmezone (13; 18; 19) für das vorbestimmte Volumen, wobei die Stütze (3; 103; 203; 303) eine vorbestimmte Länge (L1) aufweist, die geringer als die vorbestimmte Länge (L) des dünnen Rohres (6) ist und in das Innere des dünnen Rohres (6) eingeführt werden kann; und
- einen Schieber (4), umfassend einen ersten Abschnitt (14), der einen Anschlag aufweist, und einen zweiten Abschnitt (15), der sich auf einer vorbestimmten Länge (L2) ab dem Anschlag erstreckt, wobei die Summe der vorbestimmten Länge (L2) des zweiten Abschnitts (15) und der vorbestimmten Länge (L1) der Stütze (3; 103; 203; 303) geringer als die vorbestimmte Länge (L) des dünnen Rohrs (6) ist, wobei der zweite Abschnitt (15) in das Innere des dünnen Rohrs (6) eingeführt werden kann, um die Stütze (3; 103; 203; 303) vorzuschieben, bis der Anschlag des ersten Abschnitts (14) am dünnen Rohr (6) zur Anlage gelangt, wobei die Stütze (3; 103; 203; 303) nun eine vorbestimmte Position in dem dünnen Rohr (6) mit einem Zwischenraum zwischen jedem Ende (21; 121; 221; 321, 22; 122; 222; 322) der Stütze (2; 102; 202; 302) und dem benachbarten Ende (8, 9) des dünnen Rohrs (6) einnimmt.

2. Anordnung nach Anspruch 1, **dadurch gekennzeichnet, dass** jeder Zwischenraum einen Wert aufweist, der geeignet ist, die Durchführung eines Schweißens (10, 20) des dünnen Rohrs (6) in jeden Endabschnitt des dünnen Rohrs (6) zu ermöglichen, der sich zwischen einem Ende (21; 121; 221; 321, 22; 122; 222; 322) der Stütze (3; 103; 203; 303) und dem benachbarten Ende (8, 9) des dünnen Rohrs (6) befindet.

3. Anordnung nach Anspruch 2, **dadurch gekennzeichnet, dass** mindestens einer dieser Endabschnitte einen Wert gleich der vorbestimmten Länge (L2) des zweiten Abschnitts (15) des Schiebers (4) aufweist.

4. Anordnung nach einem der Ansprüche 1 bis 3, **dadurch gekennzeichnet, dass** der vorbestimmte Innendurchmesser (Dᵢ) des dünnen Rohrs (6) zwischen 0,95 und 2,55 mm beträgt.

5. Anordnung nach einem der Ansprüche 1 bis 4, **dadurch gekennzeichnet, dass** die Wandstärke des dünnen Rohrs (6) zwischen 0,125 und 0,300 mm beträgt.

6. Anordnung nach einem der Ansprüche 1 bis 5, **dadurch gekennzeichnet, dass** das dünne Rohr (6) aus einem ionomeren Harz Surlyn^{®} des Typs 8921 ist.

7. Anordnung nach einem der Ansprüche 1 bis 6, **dadurch gekennzeichnet, dass** das dünne Rohr (6) an einem Ende (8) eine Erweiterung (7) aufweist.

8. Anordnung nach einem der Ansprüche 1 bis 7, **dadurch gekennzeichnet, dass** die Stütze (3; 103; 203) einen röhrenförmigen Ansatz (12), der einen vorbestimmten Außendurchmesser hat, und einen verlängerten röhrenförmigen Abschnitt (11; 111; 211) umfasst, der koaxial in den Ansatz (12) eingesetzt wird und einen vorbestimmten Außendurchmesser aufweist, der geringer als der vorbestimmte Außendurchmesser des Ansatzes (12) ist.

9. Anordnung nach Anspruch 8, **dadurch gekennzeichnet, dass** der röhrenförmige Abschnitt (11; 311) der Stütze (3; 303) eine Rinne (13) umfasst, die die Aufnahmezone bildet.

10. Anordnung nach Anspruch 8, **dadurch gekennzeichnet, dass** der röhrenförmige Abschnitt (211) der Stütze (203) eine Abflachung (19) aufweist, die die Aufnahmezone bildet.

11. Anordnung nach einem der Ansprüche 1 bis 10, **dadurch gekennzeichnet, dass** zwischen der Stütze (303) und dem dünnen Rohr (6) Haltemittel vorhanden sind, um die Stütze (303) in dem dünnen Rohr (6) in der vorbestimmten Position zu halten.

12. Anordnung nach Anspruch 11, **dadurch gekennzeichnet, dass** die Haltemittel mindestens einen vorspringenden Wulst (23) umfassen.

13. Anordnung nach Anspruch 12, **dadurch gekennzeichnet, dass** der Wulst (23) zur Stütze (303) gehört.

14. Anordnung nach einem der Ansprüche 11 und 12, **dadurch gekennzeichnet, dass** der Wulst (23) eine Druckverformung ist.

15. Anordnung nach einem der Ansprüche 1 bis 14, **dadurch gekennzeichnet, dass** der erste Abschnitt (14) des Schiebers (4) zylindrisch ist und eine größere Querabmessung als der vorbestimmte Innendurchmesser (Dᵢ) des dünnen Rohrs (6) aufweist, und dass der zweite Abschnitt (15) des Schiebers (4) zylindrisch und koaxial zum ersten Abschnitt (14) ist und eine geringere Querabmessung als der vorbestimmte Innendurchmesser (Dᵢ) des dünnen Rohrs (6) aufweist.

16. Anordnung nach einem der Ansprüche 1 bis 15, **dadurch gekennzeichnet, dass** die Anordnung ferner einen Ballast (24; 28; 29) umfasst, der dazu vorgesehen ist, entweder mit der Stütze (3; 103; 203; 303) oder dem dünnen Rohr (6) verbunden zu werden.

17. Anordnung nach Anspruch 16, **dadurch gekennzeichnet, dass** der Ballast (24; 28) im Inneren des dünnen Rohrs (6) angeordnet ist und der Hülle (102; 202) angehört.

18. Anordnung nach Anspruch 17, **dadurch gekennzeichnet, dass** der Ballast ein Stab (24) ist, umfassend einen ersten Abschnitt mit rundem Querschnitt (25) und einen zweiten Abschnitt mit ovalem Querschnitt (26).

19. Anordnung nach Anspruch 17, **dadurch gekennzeichnet, dass** der Ballast eine Kugel (28) ist.

20. Anordnung nach einem der Ansprüche 17 bis 19, **dadurch gekennzeichnet, dass** der Ballast eine vorbestimmte Länge (L4) aufweist und in dem dünnen Rohr (6) an einer vorbestimmten Position angeordnet ist, wobei die Summe der vorbestimmten Länge (L2) des zweiten Abschnitts (15) des Schiebers (4), der vorbestimmten Länge (L1) der Stütze (3; 103; 203; 303) und der vorbestimmten Länge (L4) des Ballasts (24) geringer als die vorbestimmte Länge (L) des dünnen Rohrs (6) ist, wobei der an der vorbestimmten Position angeordnete Ballast (24) nun von dem benachbarten Ende (22; 122; 222; 322) der Stütze (3; 103; 203; 303) und von dem benachbarten Ende (9) des dünnen Rohrs (6) beabstandet ist.

21. Anordnung nach Anspruch 20, **dadurch gekennzeichnet, dass** der Abstand zwischen dem Ballast (24) und dem benachbarten Ende (9) des dünnen Rohrs (6) einen Wert aufweist, der geeignet ist, die Durchführung einer Schweißung (10) des dünnen Rohrs (6) in dem Endabschnitt des dünnen Rohrs (6), der sich zwischen dem Ballast (24) und dem benachbarten Ende (9) des dünnen Rohrs (6) befindet, zu ermöglichten.

22. Anordnung nach einem der Ansprüche 17 bis 21, **dadurch gekennzeichnet, dass** zwischen dem Ballast (24; 28) und dem dünnen Rohr (6) Haltemittel vorhanden sind, um den Ballast (24; 28) in dem dünnen Rohr (6) an der vorbestimmten Position zu halten.

23. Anordnung nach Anspruch 22, **dadurch gekennzeichnet, dass** die Haltemittel mindestens einen vorspringenden Abschnitt (27) des Ballasts (24) umfassen.

24. Anordnung nach Anspruch 16, **dadurch gekennzeichnet, dass** der Ballast um das dünne Rohr (6) herum angeordnet ist.

25. Anordnung nach Anspruch 24, **dadurch gekennzeichnet, dass** der Ballast ein Ring (29) ist.

26. Anordnung nach einem der Ansprüche 16 bis 25, **dadurch gekennzeichnet, dass** der Ballast (24; 28; 29) an einem Ende des dünnen Rohrs (6) angeordnet ist.

27. Anordnung nach einem der Ansprüche 16 bis 26, **dadurch gekennzeichnet, dass** der Ballast (24; 28; 29) aus Metall ist.

28. Anordnung nach einem der Ansprüche 16 bis 27, **dadurch gekennzeichnet, dass** ein Identifikationsmittel (30; 31) des biologischen Stoffes mit dem Ballast (24; 28; 29) verbunden ist.

29. Anordnung nach Anspruch 28, **dadurch gekennzeichnet, dass** das Identifikationsmittel (30) visueller Art ist.

30. Anordnung nach Anspruch 28, **dadurch gekennzeichnet, dass** das Identifikationsmittel (31) elektronischer Art ist.

31. Anordnung nach einem der Ansprüche 1 bis 30, **dadurch gekennzeichnet, dass** die Anordnung ferner eine einheitliche Verpackung (5) umfasst, in der eine zuvor beschriebene Hülle (2; 102; 202; 302), eine zuvor beschriebene Stütze (3; 103; 203; 303) und ein zuvor beschriebener Schieber (4) enthalten sind.

32. Anordnung nach Anspruch 31, **dadurch gekennzeichnet, dass** die Verpackung (5) ein länglicher Behälter ist.
